(19)

Europäisches Patentamt
European Patent Office
Office européen des brevets

(11) **EP 0 920 744 B1**

(12) **EUROPEAN PATENT SPECIFICATION**

(45) Date of publication and mention
of the grant of the patent:
**06.02.2008 Bulletin 2008/06**

(51) Int Cl.:
*H04B 3/20* (2006.01)   *H04B 7/015* (2006.01)
*G10L 21/02* (2006.01)

(21) Application number: **97944660.6**

(22) Date of filing: **15.10.1997**

(86) International application number:
**PCT/CA1997/000763**

(87) International publication number:
**WO 1998/059431 (30.12.1998 Gazette 1998/52)**

(54) **METHODS AND APPARATUS FOR ECHO SUPPRESSION**

VERFAHREN UND VORRICHTUNG ZUR UNTERDRÜCKUNG VON ECHOS

PROCEDES ET APPAREIL DE SUPPRESSION D'ECHOS

(84) Designated Contracting States:
**DE FR GB**

(30) Priority: **24.06.1997 US 881062**

(43) Date of publication of application:
**09.06.1999 Bulletin 1999/23**

(73) Proprietor: **Nortel Networks Limited
St Laurent, Québec H4S 2A9 (CA)**

(72) Inventors:
• **RABIPOUR, Rafi
Cote St. Luc, Quebec H4W 2T2 (CA)**
• **HO, Dominic
Columbia, MO 65203 (US)**

• **FOODEEI, Majid
Montreal, Quebec H2W 2K7 (CA)**
• **SAIKALY, Madeleine
Saint-Laurent, Quebec H4N 1M8 (CA)**

(74) Representative: **Coyle, Philip Aidan et al
F. R. KELLY & CO.
27 Clyde Road
Ballsbridge
Dublin 4 (IE)**

(56) References cited:
**WO-A-96/34382         WO-A-20/05023477
GB-A- 2 256 351         US-A- 3 991 287**

**Description**

<u>Field of the Invention</u>

This invention relates to methods and apparatus for echo suppression in telecommunications systems, and is particularly applicable to suppression of echo in signals encoded using LPC-based compression.

<u>Background of the Invention</u>

Echo is a common problem in telecommunications systems, and can be very annoying to users of telecommunications systems having relatively long transmission delays, as for example satellite telecommunications systems and cellular radio telecommunications systems. Consequently, several methods for suppressing echo have been developed.

In many radio telecommunications systems, available radio spectrum is limited. In such systems, low bit rate encoding of speech signals is used to reduce the bandwidth required for transmission of each speech signal and to increase the number of speech signals that can be transmitted over the available radio spectrum. LPC coding of speech signals is used in many such systems.

Known methods for suppression of echoes in signals encoded using LPC-based compression are generally performed at the encoder or decoder where the original speech signal or the synthesized speech signal is available for processing. This location for echo suppression functionality may not be convenient in some applications, particularly where LPC codecs in the network are bypassed (e.g. in mobile-to-mobile connections) to provide better end-to-end voice quality (see, for example, International Patent Application WO-A-9 619 907 published on 27.06.1996 in the names of Hermon Pon et al and entitled System for TDMA Mobile-to-Mobile VSELP Codec Bypass).

Accordingly, there is a need for echo suppression functionality that can be applied to LPC-encoded speech signals at locations other than the codecs without excessive degradation of end-to-end speech quality.

<u>Summary of the Invention</u>

An object of this invention is to provide methods and apparatus for echo suppression that can be applied directly to signals encoded using LPC-based compression without requiring access to an original or synthesized speech signal.

This object is met by the invention claimed in claims 1, 11 and 15.

<u>Brief Description of Drawings</u>

Embodiments of the invention are described below, by way of example only. Reference is made to accompanying drawings, in which:

Figure 1 is a block schematic diagram of a telecommunications system including an echo suppressor according to an embodiment of the invention;

Figures 2A, 2B and 2C are flow charts showing steps in a method for echo detection and suppression according to an embodiment of the invention;

Figure 3 is a flow chart showing an echo suppression step of Figure 2C in greater detail; and

Figure 4 is a flow chart showing a comfort noise generation step of Figure 3 in greater detail.

<u>Detailed Description of Embodiments</u>

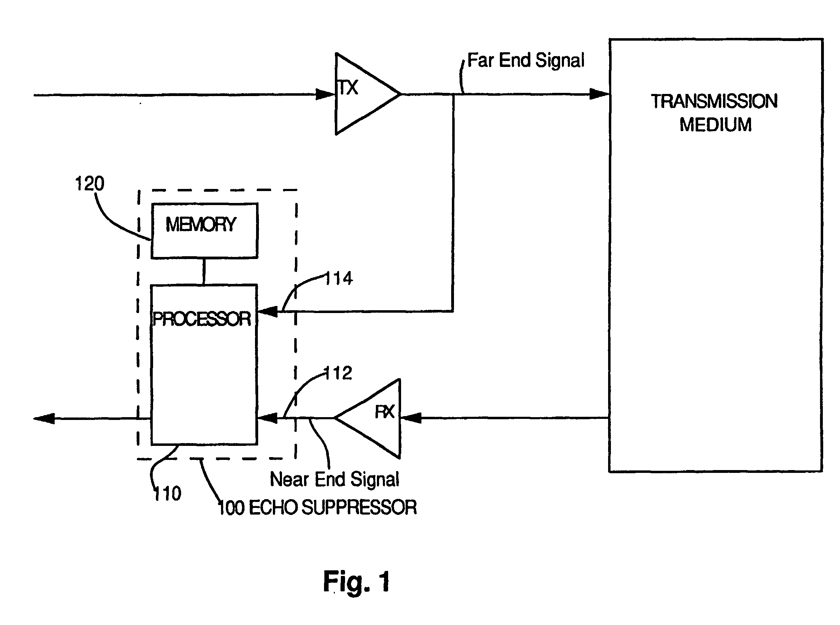

Figure 1 is a block schematic diagram of a telecommunications system including an echo suppressor 100 according to an embodiment of the invention.

The echo suppressor 100 comprises a processor 110 and a processor-readable storage medium in the form of a memory 120 which stores instructions for execution by the processor 110. The processor 110 has a near end signal input port 112 on which it receives an LPC-encoded near end signal, and a far end signal input port 114 on which it receives an LPC-encoded far end signal. The processor 110 executes instructions stored in the memory 120 to process the near end and far end signals so as to compute measures of echo of the far end signal in the near end signal as described below.

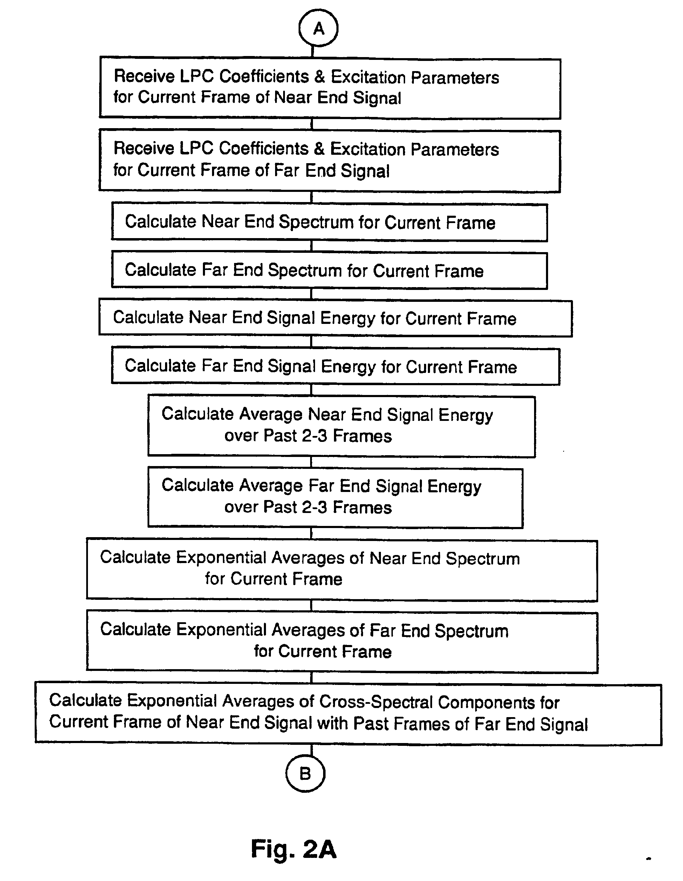

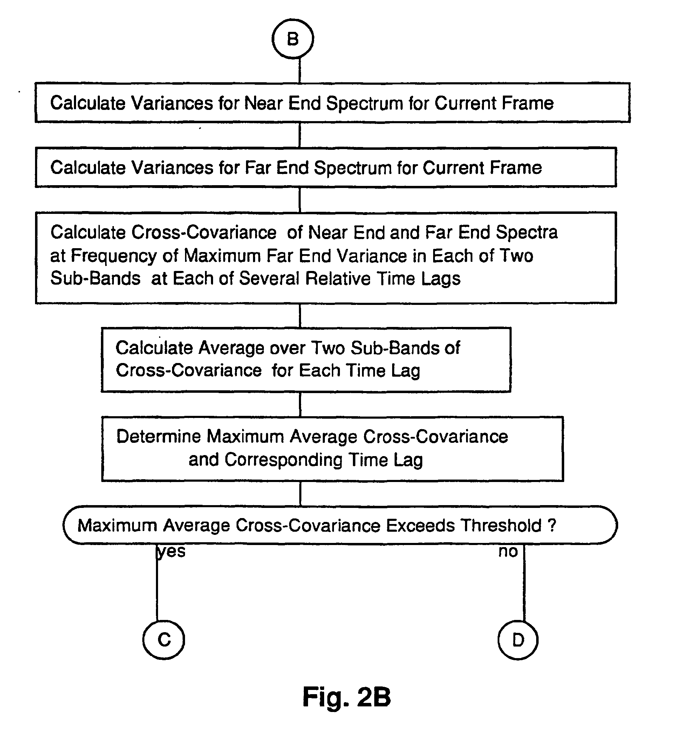

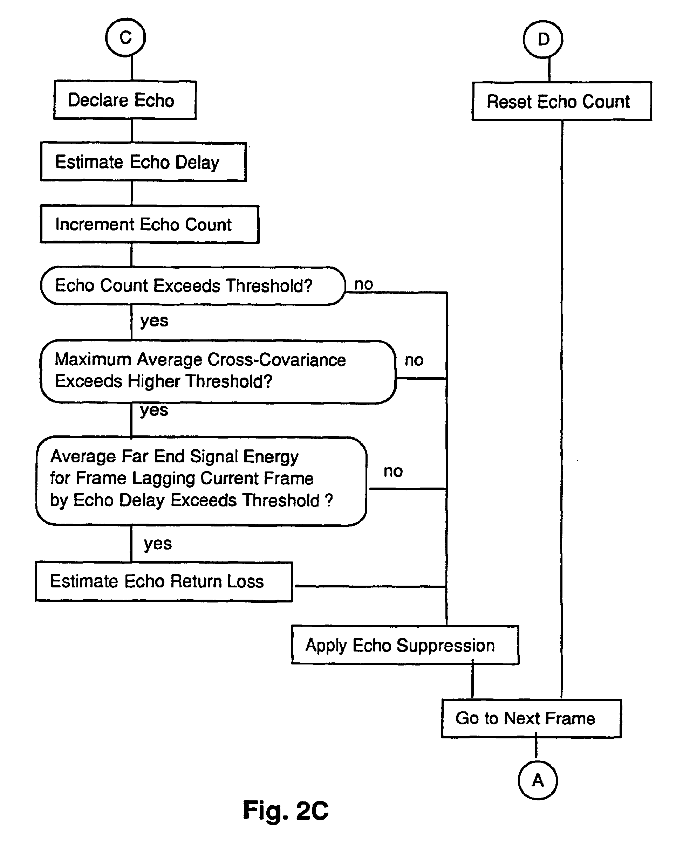

Figures 2A, 2B and 2C are flow charts showing steps performed by the processor 110 according to the instructions stored in the memory 120 to compute measures of echo of the far end signal in the near end signal.

For each successive 20 ms time interval, the processor 110 receives a frame of LPC-encoded information for the near end signal, and a frame of LPC-encoded information for the far end signal. The processor 110 executes stored instructions to derive a set of LPC coefficients and a set of excitation parameters from each frame of encoded information.

The processor 110 executes further stored instructions to calculate a near end spectrum, $S_N(f_i,k)$ for M values of $f_i$ between about 100 Hz and 2 kHz, for the frame corresponding to time k from the LPC coefficients and the excitation parameters for the frame of the near end signal corresponding to time k. Similarly, the processor 110 executes stored instructions to calculate a far end spectrum, $S_F(f_i,k)$ for M values of $f_i$ between about 100 Hz and 2 kHz, for the frame corresponding to time k from the LPC coefficients and the excitation parameters for the frame of the far end signal corresponding to time k. M is typically 8 to 12. The far end spectra for the past L 20 ms time intervals are stored in the memory for use in calculations described below. L is selected according to an expected value of echo delay. For example, if the expected echo delay is from 240 ms to 360 ms, L would be at least 18. (The methods used to derive spectra from LPC coefficients and excitation parameters depend on the specific LPC coding scheme used, and are well known to those skilled in the LPC coding art.)

The processor 110 also executes stored instructions to calculate a near end signal energy $R_N(k)$ from the LPC coefficients and the excitation parameters for the frame of the near end signal corresponding to time $k$, and a far end signal energy $R_F(k)$ from the LPC coefficients and the excitation parameters for the frame of the far end signal corresponding to time $k$. The near end signal energies are averaged over a predetermined number of frames, typically 2 or 3 frames. The far end signal energy values are also averaged over the predetermined number of frames, and the far end signal energy averages for the past L 20 ms time intervals are stored in the memory 120 for use in calculations described below. (The methods used to derive signal energies from LPC coefficients and excitation parameters depend on the specific LPC coding scheme used, and are well known to those skilled in the LPC coding art.)

The processor 110 executes stored instructions to calculate exponential averages of the near end and far end spectra according to the following equations:

$$\overline{S_F}(f_i,k) \;=\; \lambda_1 \cdot \overline{S_F}(f_i,k-1)+(1-\lambda_1)\cdot S_F(f_i,k) \quad \textit{for } i = 1 \textit{ to } M \qquad \textbf{Eq 1}$$

$$\overline{S_N}(f_i,k) \;=\; \lambda_1 \cdot \overline{S_N}(f_i,k-1)+(1-\lambda_1)\cdot S_N(f_i,k) \quad \textit{for } i = 1 \textit{ to } M \qquad \textbf{Eq 2}$$

$$\overline{S_F^2}(f_i,k) \;=\; \lambda_1 \cdot \overline{S_F^2}(f_i,k-1)+(1-\lambda_1)\cdot S_F^2(f_i,k) \quad \textit{for } i = 1 \textit{ to } M \qquad \textbf{Eq 3}$$

$$\overline{S_N^2}(f_i,k) \;=\; \lambda_1 \cdot \overline{S_N^2}(f_i,k-1)+(1-\lambda_1)\cdot S_N^2(f_i,k) \quad \textit{for } i = 1 \textit{ to } M \qquad \textbf{Eq 4}$$

$\lambda_1$ is typically 0.5.

An exponential average of cross-spectral components is also calculated according to the following equation:

$$\overline{S_{FN}^2}(f_i,k)_l \;=\; \lambda_1 \cdot \overline{S_{FN}^2}(f_i,k-1)_l +(1-\lambda_1)\cdot S_F(f_i,k-l)\cdot S_N(f_i,k)$$
$$\textit{for } i = 1 \textit{ to } M \textit{ and } l = L_0, L_0+1,...,L \qquad \textbf{Eq 5}$$

where l denotes a time lag, $L_0$ is a minimum expected echo path delay, and L is a maximum expected echo path delay, each of these quantities representing an integer number of 20 ms time intervals.

The processor 110 executes further stored instructions to calculate variances of the near end spectra and the far end spectra according to the following equations:

$$\text{var}\big(S_N(f_i,k)\big) \;=\; \overline{S_N^2}(f_i,k)-\overline{S_N}^2(f_i,k) \quad \textit{for } i = 1 \textit{ to } M \qquad \textbf{Eq 6}$$

$$\text{var}\left(S_F(f_i,k)\right) \;=\; \overline{S_F^2}(f_i,k) - \overline{S_F}^2(f_i,k) \qquad \textit{for i = 1 to M}$$

$$\textit{(store from k-L to k)} \qquad \textbf{Eq 7}$$

The far end signal variances for the past L 20 ms time intervals are stored in the memory 120 for use in calculations described below.

The far end signal variances are divided into two groups. Group A contains the variances calculated for a sub-band of frequencies between 200 Hz and 920 Hz, a frequency range which generally contains a first formant frequency in a speech signal. The variances in Group A are compared, the maximum variance is determined and the frequency corresponding to the maximum variance is designated $f_A$. Group B contains the variances calculated for a sub-band of frequencies between 1160 Hz and 1800 Hz, a frequency range which generally contains a second formant frequency in a speech signal. The variances in Group B are compared, the maximum variance is determined and the frequency corresponding to the maximum variance is designated $f_B$.

The processor 110 executes further stored instructions to calculate a covariance at each of frequencies $f_A$ and $f_B$ for each time lag in the range between the minimum echo delay $L_0$ and the maximum echo delay L according to the following equation:

$$\rho_i^2(l,k) \;=\; \frac{\left(\overline{S_{FN}^2}(f_i,k)_l - \overline{S}_F(f_i,k-l)\cdot\overline{S}_N(f_i,k)\right)^2}{\text{var}\left(S_F(f_i,k-l)\right)\cdot\text{var}\left(S_N(f_i,k)\right)} \qquad i = A,B \qquad \textbf{Eq 8}$$

The processor 110 executes further stored instructions to average the covariances at the two frequencies to derive an average covariance for each time lag between $L_0$ and L as follows:

$$\rho^2(l,k) \;=\; \frac{1}{2}\sum_{i=A,B}\rho_i^2(l,k) \qquad l = L_0, L_0+1,...,L \qquad \textbf{Eq 9}$$

The processor 110 then executes stored instructions to determine the maximum value of the average covariance:

$$\rho_{\text{max}}^2(k) \;=\; \overset{\text{max}}{l}\left(\rho^2(l,k)\right) \;=\; \rho^2(l^0,k) \qquad \textbf{Eq 10}$$

and the time lag $l^0$ corresponding to the maximum value of the average covariance. The maximum value of the average covariance is a measure of echo of the far end signal in the near end signal which may be used as described below.

The processor 110 executes further instructions to compare the maximum value of the average covariance to a predetermined value (typically about 0.1). If the maximum value of the average covariance exceeds the predetermined value, the processor 110 declares frame k of the near end signal to contain echo.

When frame k of the near end signal is declared to contain echo, the processor 110 executes further stored instructions to calculate an exponential average of the time lag $l^0$ corresponding to the maximum value of the average covariance according to the following equation:

$$D(k) \;=\; \lambda_2\cdot D(k-1) + (1-\lambda_2)\cdot l^0(k) \qquad \textbf{Eq 11}$$

to estimate an echo delay $D(k)\cdot\lambda_2$ is typically about 0.9 to 0.95.

When frame k is declared to contain echo, the processor 110 also executes further stored instructions to count consecutive echo frames. If the maximum value of the average covariance exceeds a predetermined value (which may exceed the predetermined value used for declaring echo in the first instance to provide even greater certainty that echo is present), the number of consecutive echo frames exceeds a predefined minimum number (typically 2 or 3) and the average far end signal energy at the time interval lagging the present time interval by the echo delay exceeds a predetermined threshold, an echo return loss (ERL) is estimated from the average signal energies calculated above according to the following equation:

$$ERL(k) \;=\; \lambda_2 \cdot ERL(k-1) + (1-\lambda_2) \cdot \frac{\overline{R}_N(k)}{\overline{R}_F(k-l^0)} \qquad\qquad \text{Eq 12}$$

where $\overline{R}_N(k)$ and $\overline{R}_F(k\text{-}l^0)$ are the averages of the near and far end energies respectively.

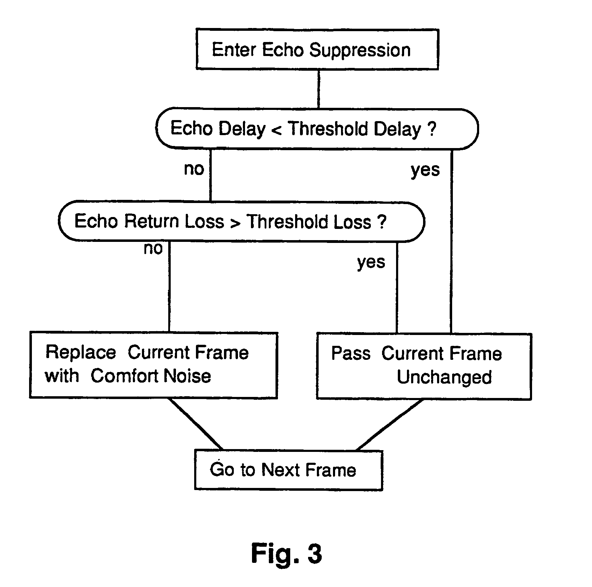

The echo delay, D(k), and the echo return loss, *ERL(k)*, are used in further operations of the processor 110 to determine the most effective echo suppression treatment as shown in Figure 3. If the echo delay, *D(k)*, is less than a threshold delay, typically 10 msec, no echo suppression is applied. If the echo return loss, *ERL(k)*, is greater than a threshold loss, typically 45-50 dB for an echo delay greater than 50 msec, no echo suppression is applied. But if the echo delay, *D(k)*, exceeds the delay threshold, and the echo return loss, *ERL(k)*, is below the loss threshold, the processor 110 executes stored instructions to replace the signal for frame k with comfort noise. In a sophisticated implementation, the loss threshold may be a function of the echo delay, *D(k)*, for the current frame.

If the maximum value of the average covariance does not exceed the predetermined value, the processor 110 declares frame k of the near end signal to be echo-free, and takes no action to suppress echo in that frame of the near end signal, to calculate echo delay or to calculate echo return loss.

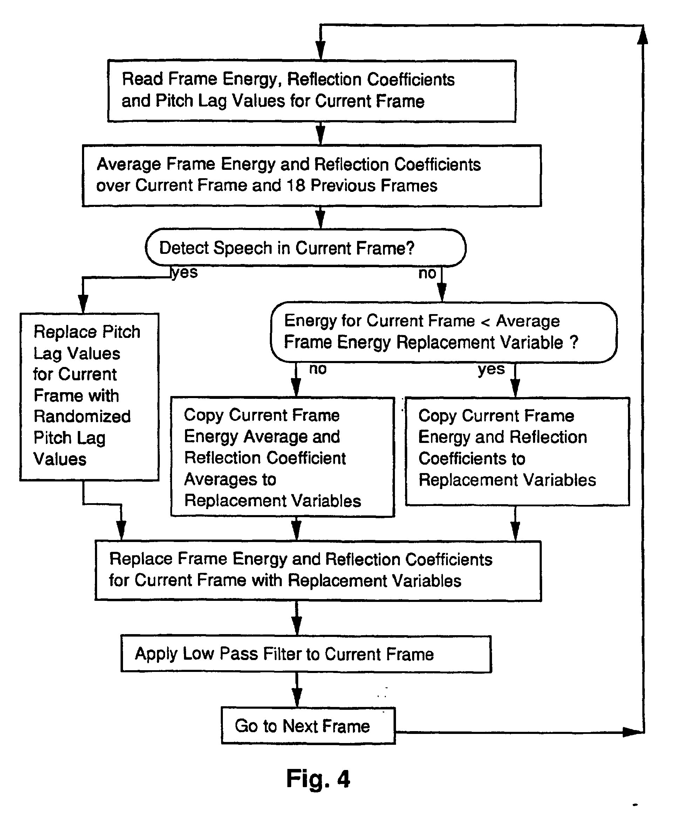

Figure 4 is a flow chart showing steps performed by the processor 110 according to the instructions stored in the memory 120 to generate the comfort noise signal.

For each successive 20 ms time interval (called a "frame"), the processor 110 receives a set of LPC coefficients, including 10 reflection coefficients, $k_1$ to $k_{10}$ and a frame energy value, $R_0$, and a set of excitation parameters including four pitch lag values, $lag_1$ to $lag_4$. The processor 110 executes stored instructions to average the frame energy, $R_0$, over the current frame and the previous 18 frames to compute an average frame energy, $R_0avg$. Similarly, the processor 110 executes stored instructions to average each of the ten reflection coefficients, $k_i$, over the current frame and the previous 18 frames to compute ten average reflection coefficients, $k_i^{avg}$.

The processor 110 executes further stored instructions to determine whether the current frame of the LPC-encoded near end signal contains speech sounds. (A suitable set of instructions is described in International Patent Application WO 96 34 382 A1 entitled Methods and Apparatus for Distinguishing Speech Intervals from Noise Intervals in Speech Signals and filed in the names of C.C. Chu et al).

If the processor 110 determines that the current frame of the LPC-encoded near end signal contains no speech sounds, the processor 110 executes further stored instructions to compare the frame energy for the current frame to an average frame energy, $R_0^{stable}$, calculated over a plurality of preceding frames. If the current frame energy is lower than $R_0^{stable}$, the processor 110 executes further stored instructions to copy the current frame energy and the current reflection coefficients to variables, $R_0^{stable}$ and $k_i^{stable}$. The excitation parameters including the four pitch lag values, $lag_i$, are left unchanged.

If the current frame energy is not lower than $R_0^{stable}$, the processor 110 executes further stored instructions to copy the average frame energy, $R_0^{avg}$, and the average reflection coefficients, $k_i^{avg}$, calculated for the current frame to the variables, $R_0^{stable}$ and $k_i^{stable}$, which are later used to replace the frame energy and reflection coefficients for the current frame, Ro and $k_i$, after quantization. In this case, the excitation parameters including the four pitch lag values, $lag_i$, are left unchanged.

If the processor 110 determines that the current frame of the LPC-encoded near end signal contains speech sounds, the processor 110 executes further stored instructions to replace the four pitch lag values, $lag_i$, for the current frame with pitch lag values that are randomly selected from the values permitted for pitch lags in the VSELP coding technique (i.e. from 20 to 146). In this case, the values of the variables $R_0^{stable}$ and $k_i^{stable}$ are not updated.

The processor 110 executes further stored instructions to replace the frame energy and reflection coefficients for the current frame, $R_0$ and $k_i$, with the stored variables $R_0^{stable}$ and $k_i^{stable}$ respectively after quantization. For frames in which speech sounds have not been detected, the values of $R_0^{stable}$ and $k_i^{stable}$ have been updated for the current frame. For frames in which speech sounds have been detected, the values of $R_0^{stable}$ and $k_i^{stable}$ have not been updated for the current frame, i.e. the values of $R_0^{stable}$ and $k_i^{stable}$ are the same as were used for an immediately previous frame.

The processor 110 then executes further stored instructions to modify the LPC-encoded bit stream so as to reduce high frequency components of an audio signal to be synthesized from the LPC-encoded bit stream. In particular, for each frame the processor calculates an impulse response of a filter defined by the LPC coefficients for that frame. The processor applies a low pass filter to the impulse response to calculate a modified impulse response. The processor 110 then applies LPC analysis techniques to calculate modified LPC coefficients from the modified impulse response, and replaces the LPC coefficients for the current frame with the modified LPC coefficients. The processor 110 then calculates the respective frequency responses at zero frequency for the filter defined by the original LPC coefficients for the current frame and for a filter defined by the modified LPC coefficients for the current frame, dividing the frequency response at zero frequency for the original LPC coefficients by the frequency response at zero frequency for the modified LPC coefficients to derive a correction factor. The frame energy for the current frame (one of the excitation parameters) is then multiplied by the correction factor and replaced by the resulting value after quantization.

The embodiment of the invention described above operates directly on an LPC-encoded speech signal to generate LPC-encoded comfort noise. Consequently, this embodiment can be used to generate comfort noise anywhere where the LPC-encoded bit stream is available. It is not necessary to locate the comfort noise generation at the LPC encoder or decoder, nor is it necessary to synthesize the speech signal from the LPC bit stream to generate the comfort noise. Moreover, this embodiment of the invention provides comfort noise which is relatively natural-sounding and consistent with background noise in the speech signal, so as to substantially avoid subjectively annoying characteristics of comfort noise generated by at least some of the known alternative techniques for generating comfort noise.

In the above embodiment, the comfort noise is modelled based on recent frames which are reliably determined to contain noise rather than speech sounds. Frames determined by the speech detector to contain speech are not used to update the output LPC coefficients, $R_0^{stable}$ and $k_i^{stable}$ because these do not accurately describe the background noise. Moreover, frames determined by the speech detector to not contain speech sounds, but for which the energy $R_0$ is lower than the current value of $R_0^{stable}$ determined from previous frames are more likely to contain only background noise than the previous frames. Consequently, LPC coefficients for these frames are used preferentially over the averaged LPC coefficients of the previous frames to model the background noise. The LPC coefficients are averaged over successive frames as this has been determined to provide more natural-sounding comfort noise.

The implementations described above can be modified without departing from the principles of the invention. For example, the specific parameter values exemplified above, and the particular methods used for averaging over time, calculating near end and far end spectra, calculating measures of correlation for the near and far end spectra can be substituted with other parameter values and methods. Indeed, at least some such modifications are likely to be appropriate if the invention is applied to a different LPC coding scheme. The parameters given above are likely to be most appropriate for the VSELP codec specified by the IS-54 standard.

However, with suitable modifications the technique described above could be applied to other CELP-encoded speech signals, for example those using standardized CELP codecs specified for GSM and CDMA wireless systems.

In the comfort noise generation process described above, when the processor 110 determines that the current frame of the LPC-encoded near end signal contains no speech sounds and that the current frame energy is - lower than $R_0^{stable}$, the processor 110 may execute stored instructions which compute a shorter term averages of the frame energy $R_0$ and the reflection coefficients $k_i$ than those calculated over 18 frames. For example, the shorter term averages could be calculated over 5 frames. The shorter term averages could then be copied to the variables, $R_0^{stable}$ and $k_i^{stable}$.

Alternatively, the averages could be exponential rather than arithmetic averages, and the short term averages could be calculated using a larger weighting factor for the current frame than is used for calculating the longer term averages.

These and other variations are within the scope of the invention as defined in the claims below.

## Claims

1. A method for suppressing echo of a far end signal encoded using LPC-based compression in a near end signal encoded using LPC-based compression, the method comprising:

determining a near end spectrum from the parameters of each frame of the near end encoded signal and determining a far end spectrum from the parameters of each frame of the far end encoded signal;
determining a respective measure of correlation of the near end spectrum to each of a plurality of far end spectra, each far end spectrum corresponding to a respective frame of the far end signal, the respective frame of the far end signal having a respective time lag with respect to the frame of the near end encoded signal;
comparing the measures of correlation to determine a maximum measure of correlation;
declaring sufficient echo to merit echo suppression to be detected in the frame of the near end encoded signal when the maximum measure of correlation exceeds a predefined value;
upon determining that insufficient echo to merit echo suppression is present in a frame of the near end encoded signal, passing the parameters of said frame of the near end encoded signal unmodified; and
upon determining that sufficient echo to merit echo suppression is present in a frame of the near end encoded signal, directly modifying encoded parameters of said frame of the near end encoded signal to suppress echo in said frame.

2. A method as defined in claim 1, wherein each step of determining a respective measure of correlation of the near end spectrum to the far end spectrum comprises determining a cross-covariance of the near end spectrum to the far end spectrum for each of a plurality of frequency bands.

3. A method as defined in claim 2, wherein each step of determining a respective measure of correlation of a near end spectrum to a far end spectrum comprises averaging the cross-covariances.

4. A method as defined in claim 2 or 3, wherein each step of determining a cross-covariance of a near end spectrum to a far end spectrum comprises calculating moving window averages of the near end spectrum and the far end spectrum.

5. A method as defined in any one of claims 1 to 4, wherein the step of modifying the parameters of said frame of the near end encoded signal to suppress echo in said frame comprises modifying said parameters to replace said frame with a frame of encoded noise generated from said parameters.

6. A method as defined in claim 5, wherein the step of modifying said parameters to replace said frame with a frame of LPC-encoded noise generated from said parameters comprises:

   replacing LPC coefficients of said frame with respective averages of the LPC coefficients over a plurality of preceding frames;
   detecting whether speech is present in said frame; and
   upon detection of speech in said frame, randomizing excitation parameters of said frame.

7. A method as defined in claim 6, further comprising processing the modified parameters so as to reduce high frequency components of an audio signal to be synthesized from the processed parameters.

8. A method as defined in claim 7, wherein the step of processing the modified parameters so as to reduce high frequency components of an audio signal to be synthesized from the processed parameters comprises applying a correction factor to a frame energy, the correction factor comprising a frequency response at zero frequency of a filter defined by the modified LPC coefficients before said processing divided by a frequency response at zero frequency of a filter defined by LPC coefficients resulting from said processing.

9. A method as defined in any one of claims 6 to 8, wherein the step of replacing LPC coefficients comprises:

   for frames in which no speech is detected, replacing LPC coefficients for said frame with respective averages calculated over the said frame and a plurality of preceding frames; and
   for frames in which speech is detected, replacing LPC coefficients for said frame with respective averages of LPC coefficients used to replace LPC coefficients of an immediately previous frame and randomizing excitation parameters for said frame.

10. A method as defined in claim 9, wherein the step of randomizing excitation parameters comprises randomizing lag values of said frame.

11. Apparatus for suppressing echo of a far end signal encoded using LPC-based compression in a near end signal encoded using LPC-based compression, the apparatus comprising a processor and a storage medium for storing instructions for execution by the processor, the instructions comprising:

   instructions for determining a near end spectrum from the parameters of each frame of the near end encoded signal and determining a far end spectrum from the parameters of each frame of the far end encoded signal;
   instructions for determining a respective measure of correlation of the near end spectrum to each of a plurality of far end spectra, each far end spectrum corresponding to a respective frame of the far end signal, the respective frame of the far end signal having a respective time lag with respect to the frame of the near end encoded signal;
   instructions for comparing the measures of correlation to determine a maximum measure of correlation;
   instructions for passing the parameters of said frame of the near end encoded signal unmodified upon determining that insufficient echo to merit echo suppression is present in a frame of the near end encoded signal; and
   instructions for directly modifying encoded parameters of said frame of the near end encoded signal to suppress echo in said frame upon determining that sufficient echo to merit echo suppression is present in a frame of the near end encoded signal.

12. Apparatus as defined in claim 11, wherein the instructions for modifying the parameters of said frame of the near end encoded signal to suppress echo in said frame comprise instructions for modifying said parameters to replace said frame with a frame of encoded noise generated from said parameters.

13. Apparatus as defined in claim 12, wherein the instructions for modifying said parameters to replace said frame with a frame of encoded noise generated from said parameters comprise:

instructions for replacing LPC coefficients of said frame with respective averages of the LPC coefficients over a plurality of preceding frames;
instructions for detecting whether speech is present in said frame; and
instructions for randomizing excitation parameters of said frame upon detection of speech in said frame.

14. Apparatus as defined in claim 13, wherein the instructions for replacing LPC coefficients comprise:

instructions for replacing LPC coefficients for said frame with respective averages calculated over the said frame and a plurality of preceding frames for frames in which no speech is detected; and
replacing LPC coefficients for the said frame with respective averages of LPC coefficients used to replace LPC coefficients of an immediately previous frame for frames in which speech is detected.

15. A storage medium storing processor-readable instructions for execution by a processor to suppress echo of a far end signal encoded using LPC-based compression in a near end signal encoded using LPC-based compression, the instructions comprising:

instructions for determining a near end spectrum from the parameters of each frame of the near end encoded signal and determining a far end spectrum from the parameters of each frame of the far end encoded signal;
instructions for determining a respective measure of correlation of the near end spectrum to each of a plurality of far end spectra, each far end spectrum corresponding to a respective frame of the far end signal, the respective frame of the far end signal having a respective time lag with respect to the frame of the near end encoded signal;
instructions for comparing the measures of correlation to determine a maximum measure of correlation;
instructions for passing the parameters of said frame of the near end encoded signal unmodified upon determining that insufficient echo to merit echo suppression is present in a frame of the near end encoded signal; and
instructions for directly modifying encoded parameters of said frame of the near end encoded signal to suppress echo in said frame upon determining that sufficient echo to merit echo suppression is present in a frame of the near end encoded signal.

**Patentansprüche**

1. Verfahren zur Unterdrückung des Echos eines Fern-Signals, das unter Verwendung einer LPC-basierten Kompression codiert ist, in einem Nah-Signal, das unter Verwendung einer LPC-basierten Kompression codiert ist, wobei das Verfahren Folgendes umfasst:

Bestimmen eines Nah-Spektrums aus den Parametern jede Rahmens für das codierte Nah-Signal und Bestimmen eines Fern-Spektrums aus den Parametern jedes Rahmens des codierten Fern-Signals;
Bestimmen einer jeweiligen Messung der Korrelation des Nah-Spektrums zu jedem einer Vielzahl von Fern-Spektren, wobei jedes Fern-Spektrum einem jeweiligen Rahmen des Fern-Signals entspricht, wobei der jeweilige Rahmen des Fern-Signals eine jeweilige Zeit-Nacheilung bezüglich des Rahmens des codierten Nah-Signals hat;
Vergleichen der Messungen der Korrelation zur Bestimmung einer maximalen Messung der Korrelation;
Erklären der Feststellung eines ausreichenden Echos zur Rechtfertigung einer Echo-Unterdrückung in dem Rahmen des codierten Nah-Signals, wenn die maximale Messung der Korrelation einen vorgegebenen Wert übersteigt;
bei Feststellung, das ein unzureichendes Echo zur Rechtfertigung einer Echo-Unterdrückung in einem Rahmen des codierten Nah-Signals vorhanden ist, Weiterleitung der Parameter des Rahmens des codierten Nah-Signals ohne Modifikation; und

bei Feststellung, das ein ausreichendes Echo zur Rechtfertigung einer Echo-Unterdrückung in einem Rahmen des codierten Nah-Signals vorhanden ist, direktes Modifizieren codierter Parameter des Rahmens des codierten Nah-Signals zur Unterdrückung des Echos in dem Rahmen.

2. Verfahren nach Anspruch 1, bei dem jeder Schritt der Feststellung einer jeweiligen Messung der Korrelation des Nah-Spektrums zu dem Fern-Spektrum die Bestimmung einer Kreuz-Kovarianz des Nah-Spektrums zu dem Fern-Spektrum für jedes einer Vielzahl der Frequenz-Bändern umfasst.

3. Verfahren nach Anspruch 2, bei dem jeder Schritt der Feststellung einer jeweiligen Messung der Korrelation eines Nah-Spektrums zu einem Fern-Spektrum die Mittelwert-Bildung der Kreuz-Kovarianzen umfasst.

4. Verfahren nach Anspruch 2 oder 3, bei dem jeder Schritt der Feststellung einer Kreuz-Kovarianz des Nah-Spektrums zum Fern-Spektrum die Berechnung von gleitenden Fenster-Mittelwerten des Nah-Spektrums und des Fern-Spektrums umfasst.

5. Verfahren nach einem der Ansprüche 1 bis 4, bei dem der Schritt der Modifikation der Parameter des Rahmens des codierten Nah-Signals zur Unterdrückung des Echos in dem Rahmen die Modifikation der Parameter zum Ersatz des Rahmens durch einen Rahmen von codiertem Rauschen umfasst, der aus den Parametern erzeugt wird.

6. Verfahren nach Anspruch 5, bei dem der Schritt der Modifikation der Parameter zum Ersatz des Rahmens durch einen Rahmen von LPC-codiertem Rauschen, der aus den Parametern erzeugt wird, Folgendes umfasst:

Ersetzen der LPC-Koeffizienten des Rahmens durch jeweilige Mittelwerte der LPC-Koeffizienten über eine Vielzahl von vorhergehenden Rahmen;
Feststellen, ob Sprache in dem Rahmen vorliegt; und
bei Feststellen von Sprache in dem Rahmen, Randomisieren von Erregungs-Parametern des Rahmens.

7. Verfahren nach Anspruch 6, das weiterhin die Verarbeitung der modifizierten Parameter zur Verringerung von Hochfrequenz-Komponenten eines Audio-Signals umfasst, das aus dem verarbeiteten Parametern zu synthetisieren ist.

8. Verfahren nach Anspruch 7, bei dem der Schritt der Verarbeitung der modifizierten Parameter zur Verringerung von Hochfrequenz-Komponenten eines aus den verarbeiteten Parametern zu synthetisierenden Audio-Signals die Anwendung eines Korrektur-Faktors auf eine Rahmen-Energie umfasst, wobei der Korrektur-Faktor einen Frequenzgang bei einer Null-Frequenz eines Filters, das durch die modifizierten LPC-Koeffizienten vor der Verarbeitung definiert ist, dividiert durch einen Frequenzgang einer Null-Frequenz eines Filters umfasst, das durch die LPC-Koeffizienten definiert ist, die sich aus der Verarbeitung ergeben.

9. Verfahren nach einem der Ansprüche 6 bis 8, bei dem der Schritt des Ersetzens der LPC-Koeffizienten Folgendes umfasst:

für Rahmen, in denen keine Sprache festgestellt wird, Ersetzen der LPC-Koeffizienten für den Rahmen durch jeweilige Mittelwerte, die über den Rahmen und eine Vielzahl von vorhergehenden Rahmen berechnet wurden; und
für Rahmen, in denen Sprache festgestellt wird, Ersetzen der LPC-Koeffizienten für den Rahmen durch jeweilige Mittelwerte von LPC-Koeffizienten, die zum Ersatz von LPC-Koeffizienten eines unmittelbar vorhergehenden Rahmens verwendet werden, und Randomisieren der Erregungs-Parameter für den Rahmen.

10. Verfahren nach Anspruch 9, bei dem der Schritt des Randomisierens der Erregungs-Parameter das Randomisieren von Nacheilungs-Werten des Rahmens umfasst.

11. Vorrichtung zur Unterdrückung des Echos eines Fern-Signals, das unter Verwendung einer LPC-basierten Kompression codiert ist, in einem Nah-Signal, das unter Verwendung einer LPC-basierten Kompression codiert ist, wobei die Vorrichtung einen Prozessor und ein Speichermedium zum Speichern von Befehlen zur Ausführung durch den Prozessor umfasst, wobei die Befehle Folgendes umfassen:

Befehle zur Feststellung eines Nah-Spektrums aus den Parametern jedes Rahmens des codierten Nach-Signals und zur Feststellung eines Fern-Spektrums aus den Parametern jedes Rahmens des codierten Fern-Signals;

Befehle zur Feststellung einer jeweiligen Messung der Korrelation des Nah-Spektrums zu jedem einer Vielzahl von Fern-Spektren, wobei jedes Fern-Spektrum einem jeweiligen Rahmen des Fern-Signals entspricht, wobei der jeweilige Rahmen des Fern-Signals eine jeweilige Zeit-Nacheilung gegenüber dem Rahmen des codierten Nah-Signals hat;

Befehle zum Vergleich der Messungen der Korrelation zur Feststellung einer maximalen Messung der Korrelation;

Befehle zur Weiterleitung der Parameter des Rahmens des codierten Nah-Signals ohne Modifikation, bei Feststellung, das ein unzureichendes Echo zur Rechtfertigung einer Echo-Unterdrückung in einem Rahmen des codierten Nah-Signals vorhanden ist; und

Befehle zur direkten Modifikation codierter Parameter des Rahmens des codierten Nah-Signals zur Unterdrückung von Echo in dem Rahmen bei der Feststellung, das ein ausreichendes Echo zur Rechtfertigung der Echo-Unterdrückung in einem Rahmen des codierten Nach-Signals vorliegt.

12. Vorrichtung nach Anspruch 11, bei dem die Befehle zur Modifikation der Parameter des Rahmens des codierten Nah-Signals zur Unterdrückung des Echos in dem Rahmen Befehle zur Modifikation der Parameter zum Ersatz des Rahmens durch einen Rahmen mit codiertem Rauschen umfassen, das aus den Parametern erzeugt ist.

13. Vorrichtung nach Anspruch 12, bei dem die Befehle zur Modifikation der Parameter zum Ersatz des Rahmens durch einen Rahmen von codiertem Rauschen, der aus den Parametern erzeugt wird, Folgendes umfassen:

Befehle zum Ersetzen der LPC-Koeffizienten des Rahmens mit jeweiligen Mittelwerten der LPC-Koeffizienten über eine Vielzahl von vorhergehenden Rahmen;
Befehle zur Feststellung, ob Sprache in dem Rahmen vorhanden ist; und
Befehle zum Randomisieren von Erregungs-Parametern des Rahmens bei Feststellung von Sprache in dem Rahmen.

14. Vorrichtung nach Anspruch 13, bei die Befehle zum Ersatz der LPC-Koeffizienten Folgendes umfassen:

Befehle zum Ersetzen der LPC-Koeffizienten für den Rahmen durch jeweilige Mittelwerte, die über den Rahmen und eine Vielzahl von vorhergehenden Rahmen berechnet werden, für Rahmen, in denen keine Sprache festgestellt wird; und
Ersetzen der LPC-Koeffizienten für den Rahmen durch jeweilige Mittelwerte von LPC-Koeffzienten, die zum Ersatz der LPC-Koeffizienten eines unmittelbar vorhergehenden Rahmens verwendet werden, für Rahmen, in denen Sprache festgestellt wird.

15. Speichermedium, das Prozessor-lesbare Befehle zur Ausführung durch einen Prozessor zur Unterdrückung des Echos eines Fern-Signals, das unter Verwendung einer LPC-basierten Kompression codiert ist, in ein Nah-Signal, das unter Verwendung einer LPC-basierten Kompression codiert ist, speichert, wobei die Befehle Folgendes umfassen:

Befehle zur Feststellung eines Nah-Spektrums aus den Parametern jedes Rahmens des codierten Nah-Signals und zur Feststellung eines Fern-Spektrums aus den Parametern jedes Rahmens des codierten Fern-Signals;
Befehle zur Feststellung einer jeweiligen Messung der Korrelation des Nah-Spektrums zu jedem einer Vielzahl von Fern-Spektren, wobei jedes Fern-Spektrum einem jeweiligen Rahmen des Fern-Signals entspricht, wobei der jeweilige Rahmen des Fern-Signals eine jeweilige Zeit-Nacheilung gegenüber dem Rahmen des codierten Nah-Signals aufweist;
Befehle zum Vergleich der Messungen der Korrelation zur Feststellung einer maximalen Messung der Korrelation;
Befehle zur Weiterleitung des Rahmens des codierten Nah-Signals ohne Modifikation bei Feststellung, dass ein unzureichendes Echo zur Rechtfertigung einer Echo-Unterdrückung in einem Rahmen des codierten Nah-Signals vorhanden ist;
Befehle zur direkten Modifizierung codierter Parameter des Rahmens des codierten Nah-Signals zur Unterdrückung von Echo in dem Rahmen bei der Feststellung, dass ein ausreichendes Echo zur Rechtfertigung einer Echo-Unterdrückung in einem Rahmen des codierten Nah-Signals vorliegt.

**Revendications**

1. Procédé pour supprimer un écho d'un signal d'extrémité éloignée encodé en utilisant une compression à base de LPC dans un signal d'extrémité proche encodé en utilisant une compression à base de LPC, le procédé comprend :

   la détermination d'un spectre d'extrémité proche à partir des paramètres de chaque trame du signal d'extrémité proche encodé et détermination d'un spectre d'extrémité éloignée à partir des paramètres de chaque trame du signal d'extrémité éloignée encodé ;
   la détermination d'une mesure respective de corrélation du spectre d'extrémité proche pour chacun d'une pluralité des spectres d'extrémité éloignée, chaque spectre d'extrémité éloignée correspondant à une trame respective du signal d'extrémité éloignée, la trame respective du signal d'extrémité éloignée ayant un retard de temps respectif par rapport à la trame du signal d'extrémité proche encodé ;
   la comparaison des mesures de corrélation pour déterminer une mesure maximum de corrélation ;
   la déclaration de l'écho suffisant pour mériter une suppression d'écho à détecter dans la trame du signal d'extrémité proche encodé lorsque la mesure maximum de la corrélation dépasse une valeur prédéfinie ;
   lors de la détermination qu'un écho insuffisant pour mériter une suppression d'écho est présent dans une trame du signal d'extrémité proche encodé, passage des paramètres de ladite trame du signal d'extrémité proche encodé non modifié; et
   lors de la détermination qu'un écho suffisant pour mériter une suppression d'écho est présent dans une trame de signal d'extrémité proche encodé, modification directement des paramètres encodés de ladite trame du signal d'extrémité proche encodé pour supprimer l'écho dans ladite trame.

2. Procédé tel que défini dans la revendication 1, dans lequel chaque étape de détermination d'une mesure respective de corrélation du spectre d'extrémité proche jusqu'au spectre d'extrémité éloignée comprend la détermination d'une covariance croisée du spectre d'extrémité proche au spectre d'extrémité éloignée pour chacune des bandes d'une pluralité de bandes de fréquence.

3. Procédé tel que défini dans la revendication 2, dans lequel chaque étape de détermination d'une mesure respective de corrélation d'un spectre d'extrémité proche jusqu'à un spectre d'extrémité éloignée comprend la moyenne des covariances croisées.

4. Procédé tel que défini dans la revendication 2 ou 3, dans lequel chaque étape de détermination d'une covariance croisée d'un spectre d'extrémité proche jusqu'à un spectre d'extrémité éloignée comprend le calcul de moyennes de fenêtre mobile du spectre d'extrémité proche et du spectre d'extrémité éloignée.

5. Procédé tel que défini dans l'une quelconque des revendications 1 à 4, dans lequel l'étape de modification des paramètres de ladite trame du signal d'extrémité proche encodé pour supprimer un écho dans ladite trame comprend la modification desdits paramètres pour remplacer ladite trame par une trame de bruit encodée générée par lesdits paramètres.

6. Procédé tel que défini dans la revendication 5, dans lequel l'étape de modification desdits paramètres pour remplacer ladite trame par une trame de bruit encodée en LPC générée à partir desdits paramètres comprend :

   le remplacement des coefficients LPC de ladite trame par des moyennes respectives des coefficients LPC sur une pluralité de trames précédentes ;
   la détection si la voix est présente dans ladite trame ; et
   lors de la détection de la voix dans ladite trame, répartition aléatoire des paramètres d'excitation de ladite trame.

7. Procédé tel que défini dans la revendication 6, comprenant en outre le traitement des paramètres modifiés afin de réduire des composantes de fréquence élevée d'un signal audio à synthétiser à partir des paramètres traités.

8. Procédé tel que défini dans la revendication 7, dans lequel l'étape de traitement des paramètres modifiés afin de réduire les composantes de fréquence élevée d'un signal audio à synthétiser à partir des paramètres traités comprend l'application d'un facteur de correction à une énergie de trame, le facteur de correction comprenant une réponse de fréquence à une fréquence nulle d'un filtre défini par les coefficients LPC modifiés avant ledit traitement divisée par une réponse de fréquence à une fréquence nulle d'un filtre défini par les coefficients LPC résultant dudit traitement.

9. Procédé tel que défini dans l'une quelconque des revendications 6 à 8, dans lequel l'étape de remplacement des coefficients LPC comprend:

pour des trames dans lesquelles aucune voix n'est détectée, remplacement de coefficients LPC pour ladite trame par des moyennes respectives calculées sur ladite trame et une pluralité de trames précédentes ; et pour des trames dans lesquelles la voix est détectée, remplacement de coefficients LPC pour ladite trame par des moyennes respectives des coefficients LPC utilisés pour remplacer des coefficients LPC d'une trame immédiatement précédente et répartition aléatoire des paramètres d'excitation pour ladite trame.

**10.** Procédé tel que défini dans la revendication 9, dans lequel l'étape de répartition aléatoire des paramètres d'excitation comprend la répartition aléatoire des valeurs de retard de ladite trame.

**11.** Appareil pour supprimer un écho d'un signal d'extrémité éloignée encodé en utilisant une compression à base de LPC dans un signal d'extrémité proche encodé en utilisant une compression à base de LPC, l'appareil comprenant un processeur et un support de stockage pour stocker des instructions pour l'exécution par le processeur, les instructions comprenant :

des instructions pour déterminer un spectre d'extrémité proche à partir des paramètres de chaque trame du signal d'extrémité proche encodé et détermination d'un spectre d'extrémité éloignée à partir des paramètres de chaque trame du signal d'extrémité éloignée encodé ;
des instructions pour déterminer une mesure respective de corrélation du spectre d'extrémité proche pour chacune d'une pluralité de spectres d'extrémité éloignée, chaque spectre d'extrémité éloignée correspondant à une trame respective du signal d'extrémité éloignée, la trame respective du signal d'extrémité éloignée ayant un retard de temps respectif par rapport à la trame du signal d'extrémité proche encodé ;
des instructions pour comparer des mesures de corrélation pour déterminer une mesure maximum de corrélation ;
des instructions pour passer les paramètres de ladite trame du signal d'extrémité proche encodé non modifié lors de la détermination qu'un écho insuffisant pour mériter une suppression d'écho est présent dans une trame du signal d'extrémité proche encodé ; et
des instructions pour modifier directement des paramètres encodés de ladite trame du signal d'extrémité proche encodé pour supprimer l'écho de ladite trame lors de la détermination qu'un écho suffisant pour mériter une suppression d'écho est présent dans une trame du signal d'extrémité proche encodé.

**12.** Appareil tel que défini dans la revendication 11, dans lequel les instructions pour modifier les paramètres de ladite trame du signal d'extrémité proche encodé pour supprimer l'écho dans ladite trame comprennent des instructions pour modifier lesdits paramètres pour remplacer ladite trame par une trame de bruit encodée générée par lesdits paramètres.

**13.** Appareil tel que défini dans la revendication 12, dans lequel les instructions pour modifier lesdits paramètres pour remplacer ladite trame par une trame de bruit encodée générée par ledit paramètre comprend :

des instructions pour remplacer des coefficients LPC de ladite trame par des moyennes respectives des coefficients LPC sur une pluralité de trames précédentes ;
des instructions pour détecter si la voix est présente dans ladite trame ; et
des instructions pour répartir de façon aléatoire des paramètres d'excitation de ladite trame lors de la détection de voix dans ladite trame.

**14.** Appareil tel que défini dans le revendication 13, dans lequel les instructions pour remplacer les coefficients LPC comprennent :

des instructions pour remplacer des coefficients LPC pour ladite trame par des moyennes respectives calculées sur ladite trame et une pluralité de trames précédentes pour des trames dans lesquelles aucune voix n'est détectée ; et
le remplacement des coefficients LPC pour ladite trame par des moyennes respectives de coefficients LPC utilisés pour remplacer des coefficients LPC d'une trame immédiatement précédente pour des trames dans lesquelles une voix est détectée.

**15.** Support de stockage stockant des instructions lisibles par processeur pour l'exécution par un processeur pour supprimer l'écho d'un signal encodée d'extrémité éloignée en utilisant une compression à base de LPC dans un signal d'extrémité proche encodé en utilisant une compression à base de LPC, les instructions comprenant :

des instructions pour détecter un spectre d'extrémité proche à partir des paramètres de chaque trame du signal d'extrémité proche encodé et détermination d'un spectre d'extrémité éloignée à partir des paramètres de chaque trame du signal d'extrémité éloignée encodé ;

des instructions pour déterminer une mesure respective de corrélation du spectre d'extrémité proche pour chacun des spectres d'une pluralité de spectres d'extrémité éloignée, chaque spectre d'extrémité éloignée correspondant à une trame respective du signal d'extrémité éloignée, la trame respective du signal d'extrémité éloignée ayant un retard de temps respectif par rapport à la trame du signal d'extrémité proche encodé ;

des instructions pour comparer les mesures de corrélation pour déterminer une mesure maximum de corrélation ;

des instructions pour passer les paramètres de ladite trame du signal d'extrémité proche encodé non modifié lors de la détermination qu'un écho insuffisant pour mériter une suppression d'écho est présent dans la trame du signal d'extrémité proche encodé ; et

des instructions pour modifier directement des paramètres encodés de ladite trame du signal d'extrémité proche encodé pour supprimer un écho dans ladite trame lors de la détermination qu'un écho suffisant pour mériter une suppression d'écho est présent dans une trame du signal d'extrémité proche encodé.

**Fig. 1**

EP 0 920 744 B1

(A)

Receive LPC Coefficients & Excitation Parameters for Current Frame of Near End Signal

Receive LPC Coefficients & Excitation Parameters for Current Frame of Far End Signal

Calculate Near End Spectrum for Current Frame

Calculate Far End Spectrum for Current Frame

Calculate Near End Signal Energy for Current Frame

Calculate Far End Signal Energy for Current Frame

Calculate Average Near End Signal Energy over Past 2-3 Frames

Calculate Average Far End Signal Energy over Past 2-3 Frames

Calculate Exponential Averages of Near End Spectrum for Current Frame

Calculate Exponential Averages of Far End Spectrum for Current Frame

Calculate Exponential Averages of Cross-Spectral Components for Current Frame of Near End Signal with Past Frames of Far End Signal

(B)

## Fig. 2A

B

Calculate Variances for Near End Spectrum for Current Frame

Calculate Variances for Far End Spectrum for Current Frame

Calculate Cross-Covariance of Near End and Far End Spectra at Frequency of Maximum Far End Variance in Each of Two Sub-Bands at Each of Several Relative Time Lags

Calculate Average over Two Sub-Bands of Cross-Covariance for Each Time Lag

Determine Maximum Average Cross-Covariance and Corresponding Time Lag

Maximum Average Cross-Covariance Exceeds Threshold ?

yes                                        no

C                                          D

## Fig. 2B

Ⓒ

Declare Echo

Estimate Echo Delay

Increment Echo Count

Echo Count Exceeds Threshold? ─ no

│ yes

Maximum Average Cross-Covariance
Exceeds Higher Threshold? ─ no

│ yes

Average Far End Signal Energy
for Frame Lagging Current Frame
by Echo Delay Exceeds Threshold ? ─ no

│ yes

Estimate Echo Return Loss

Ⓓ

Reset Echo Count

Apply Echo Suppression

Go to Next Frame

Ⓐ

**Fig. 2C**

Enter Echo Suppression

Echo Delay < Threshold Delay ?

no                                    yes

Echo Return Loss > Threshold Loss ?

no                                    yes

Replace Current Frame
with Comfort Noise

Pass Current Frame
Unchanged

Go to Next Frame

**Fig. 3**

Read Frame Energy, Reflection Coefficients
and Pitch Lag Values for Current Frame

Average Frame Energy and Reflection Coefficients
over Current Frame and 18 Previous Frames

Detect Speech in Current Frame?

yes

no

Replace Pitch
Lag Values
for Current
Frame with
Randomized
Pitch Lag
Values

Energy for Current Frame < Average
Frame Energy Replacement Variable ?

no

yes

Copy Current Frame
Energy Average and
Reflection Coefficient
Averages to
Replacement Variables

Copy Current Frame
Energy and Reflection
Coefficients to
Replacement Variables

Replace Frame Energy and Reflection Coefficients
for Current Frame with Replacement Variables

Apply Low Pass Filter to Current Frame

Go to Next Frame

**Fig. 4**

**REFERENCES CITED IN THE DESCRIPTION**

**Patent documents cited in the description**

- WO 9619907 A

- WO 9634382 A1